# EUROPÄISCHE PATENTSCHRIFT

(11) **EP 3 666 455 B1**
(45) Veröffentlichungstag und Bekanntmachung des Hinweises auf die Patenterteilung: **11.08.2021**
(21) Anmeldenummer: 19214913.6
(22) Anmeldetag: 10.12.2019
(51) Int. Cl.: B23P 13/04, B60G 13/00, B21C 23/14, B23P 15/00

(54) **VERFAHREN ZUR HERSTELLUNG VON FEDERBEINGABELN**
METHOD FOR PRODUCING SUSPENSION STRUT FORKS
PROCÉDÉ DE FABRICATION DE FOURCHES DE JAMBE DE SUSPENSION

(30) Priorität: 14.12.2018 DE 102018132315
(43) Veröffentlichungstag der Anmeldung: 17.06.2020
(73) Patentinhaber: Benteler Automobiltechnik GmbH, 33102 Paderborn (DE)
(72) Erfinder: Meyer, Herr Stephan, 33605 Bielefeld (DE); Paulsen, Frode, 2819 Gjovik (NO)
(74) Vertreter: Ksoll, Peter

(56) Entgegenhaltungen:
- EP-A1- 0 349 002
- WO-A2-2019/101881
- DE-A1-102017 206 861
- DE-A1-102017 209 679
- DE-A1-102017 212 482
- JP-A- H05 161 913
- JP-A- H05 161 914
- US-A- 5 899 398

## Beschreibung

Die Erfindung betrifft ein Verfahren zur Herstellung von Federbeingabeln für Kraftfahrzeuge.

Eine Federbeingabel ist Bestandteil einer Radaufhängung eines Kraftfahrzeuges. Eine Federbeingabel der in Rede stehenden Bauart weist eine Federbeinaufnahme zur Aufnahme bzw. Abstützung eines Federbeins und zwei Gabelarme auf mit Anbindungspunkten zur Anlenkung der Federbeingabel an eine Aufhängungskomponente, beispielsweise eines Fahrwerklenkers.

Ein Verfahren zur Herstellung einer Federbeingabel zählt durch die DE 10 2017 206 861 A1 zum Stand der Technik. Es offenbart den Oberbegriff des Anspruchs 1. Die Federbeingabel weist eine Federbeinaufnahme auf und sich von dieser erstreckende Gabelarme zum Umgreifen eines Fahrwerklenkers und zur Anlenkung an diesem. Die Federbeingabel wird aus einem Leichtmetallstrangpressprofil als Halbzeug durch Schneiden und Umformen hergestellt. Das Leichtmetallstrangpressprofil weist eine mittlere Hauptkammer und zwei diametral zu dieser liegende seitliche Längskammern auf. Durch Beschneiden eines Endes der Hauptkammer werden aus den Längskammern zwei Lagerarme ausgebildet, die wiederum durch verformendes Biegen und Ausbilden von Anbindungsaufnahmen zur Federbeingabel geformt werden.

Das Verfahren ist innovativ und ermöglicht die Herstellung von gewichtsmäßig vorteilhaften Federbeingabeln mit hoher Stabilität.

Der Erfindung liegt ausgehend vom Stand der Technik die Aufgabe zu Grunde, ein Verfahren zur Herstellung von Federbeingabeln zu rationalisieren und in der Effizienz zu steigern.

Die Lösung dieser Aufgabe besteht nach der Erfindung in einem Verfahren gemäß Anspruch 1.

Vorteilhafte Ausgestaltungen und Weiterbildungen des erfindungsgemäßen Verfahrens sind Gegenstand der abhängigen Ansprüche 2 bis 10.

Eine Federbeingabel weist eine Federbeinaufnahme und zwei Gabelarme auf. Zur Herstellung wird ein metallisches Strangpressprofil bereitgestellt, welches eine zentrale mittige Hauptkammer und mindestens vier Längskammern aufweist. Die Längskammern sind über den Umfang der Hauptkammer versetzt zueinander angeordnet. Zwei Längskammern liegen sich auf dem Umfang der Hauptkammer gegenüber.

In der Praxis sind vorzugsweise vier Längskammern vorgesehen. Möglich ist, dass das Strangpressprofil auch mehr als vier Längskammern aufweist.

Das Strangpressprofil kann unterschiedliche Wandstärken besitzen. Vorzugsweise weisen die Längskammern eine andere Wandstärke auf als die mittige Hauptkammer. Insbesondere ist Wandstärke der Hauptkammer größer als die Wandstärke der Längskammern, jeweils gemessen im Querschnitt.

Das Strangpressprofil besteht vorzugsweise aus Leichtmetall, insbesondere aus Aluminium oder einer Aluminiumlegierung. Als besonders geeignet werden Aluminiumlegierungen der 6000er Reihe angesehen. Besonders bevorzugt sind aushärtbare Aluminiumlegierungen, insbesondere Aluminium-Magnesium-Silizium-Legierungen (AIMgSi). Aushärtbare Aluminiumlegierungen werden durch Wärmebehandlungen fester und härter. Ein Aspekt der Erfindung sieht vor, die Strangpressprofile (Ausgangsprofile), die Halbzeuge oder die Federbeingabeln ganz oder teilweise bzw. partiell wärmezubehandeln. Durch die Wärmebehandlung werden die Festigkeit und die Bruchzähigkeit gezielt in den Federbeingabeln eingestellt. Weiterhin ist es möglich, die Strangpressprofile oder die Halbzeuge zu erwärmen, um die Bearbeitung zu erleichtern. Hierbei können sie unmittelbar danach abgeschreckt werden, womit eine separate, anschließende Wärmebehandlung entfallen kann. Selbstverständlich ist auch eine gezielte, nachträgliche Wärmebehandlung möglich, um den Federbeingabeln die gewünschten Festigkeits- und Zähigkeitseigenschaften zu verleihen.

Ein vorteilhafter Aspekt der Erfindung sieht vor, dass die Längskammern auf einem Teilkreis um 90° +/- 15° versetzt zueinander angeordnet sind. Insbesondere sind vier Längskammern rechtwinklig zueinander angeordnet. Die Längskammern sind dann auf einem Teilkreis um 90° zueinander versetzt, so dass sich jeweils zwei Längskammern diametral gegenüberliegen.

Von dem bereitgestellten Strangpressprofil werden zwischen den Längskammern liegende Wandabschnitte der Hauptkammer entfernt. Dies erfolgt in einem mittleren Längenabschnitt des Strangpressprofils. Des Weiteren wird das Strangpressprofil in zwei Halbzeuge getrennt, dergestalt, dass jedes Halbzeug einen Zylinderabschnitt und zwei sich gegenüberliegende und gegenüber dem Zylinderabschnitt vorstehende Armabschnitte aufweist.

Ein vorteilhafter Aspekt der Erfindung sieht vor, dass aus dem Strangpressprofil jeweils zwei identische Halbzeuge hergestellt werden. Die Halbzeuge werden gegengleich, also in gleicher, aber spiegelbildlicher Weise aus dem Strangpressprofil gefertigt. Jeweils ein Endabschnitt des Ausgangsprofils, d.h. des Strangpressprofils bilden den Zylinderabschnitt. Jeweils zwei Längskammern bilden zwei gegenüber dem Zylinderabschnitt vorstehende Armabschnitte auf. Jedes Halbzeug weist dann einen Zylinderabschnitt mit zwei längeren gegenüber dem Zylinderabschnitt vorstehende Armabschnitte und zwei gekürzte Längskammern auf. Die gekürzten Längskammern besitzen eine Länge, die der Länge des Zylinderabschnittes entspricht.

Anschließend wird durch mechanische Bearbeitung der Halbzeuge jeweils eine Federbeingabel ausgebildet. Die mechanische Bearbeitung sieht insbesondere Schneid- und Umformoperationen vor. Der Zylinderabschnitt eines Halbzeugs bildet die Federbeinaufnahme. Aus den Armabschnitten eines Halbzeugs werden die Gabelarme der Federbeingabel erzeugt.

Bei der mechanischen Bearbeitung der Halbzeuge ist vorteilhafter Weise vorgesehen, dass die Zylinderabschnitte mit einem Längsschlitz versehen werden.

Insbesondere wird der Längsschnitt entlang einer gekürzten Längskammer vorgenommen.

Der Längsschnitt erleichtert die Montage eines Federbeins und verbessert dessen Befestigung. Durch den Längsschlitz kann die Federbeinaufnahme bei der Montage des Federbeins gespreizt und das Federbein in die Federbeinaufnahme eingeführt werden. Anschließend wird die Federbeinaufnahme radial durch Zusammenpressen des Längsschlitzes im Durchmesser verkleinert und das Federbein in der Federbeinaufnahme sicher festgelegt.

Bei der mechanischen Bearbeitung der Halbzeuge werden die Armabschnitte gebogen und zu jeweils einem Gabelarm geformt. Hierbei werden die Armabschnitte in Längsrichtung erst nach außen und endseitig wieder zurückgebogen, so dass sie einen bogenförmigen Verlauf aufweisen. Endseitig werden die Armabschnitte abgeflacht und die abgeflachten Endabschnitte mit Anbindungspunkten versehen. Insbesondere handelt es sich bei den Anbindungspunkten um scherschneidtechnisch, insbesondere durch Stanzen, hergestellte Lagersitze oder um eine Lochung. Bei der mechanischen Bearbeitung der Halbzeuge werden die Anbindungspunkte relativ zueinander parallel ausgerichtet, so dass deren Mittelpunkte auf einer gemeinsamen Achse liegen.

Die Erfindung ist nachfolgend anhand von Zeichnungen näher beschrieben. Es zeigen jeweils in einer Perspektive:
- Figur 1: ein Strangpressprofil als Ausgangsprodukt zur Herstellung von Federbeingabeln;
- Figur 2: das Strangpressprofil in einer Zwischenstufe der Bearbeitung;
- Figur 3: ein aus dem Strangpressprofil hergestelltes Halbzeug und
- Figur 4: eine erfindungsgemäß hergestellte Federbeingabel.

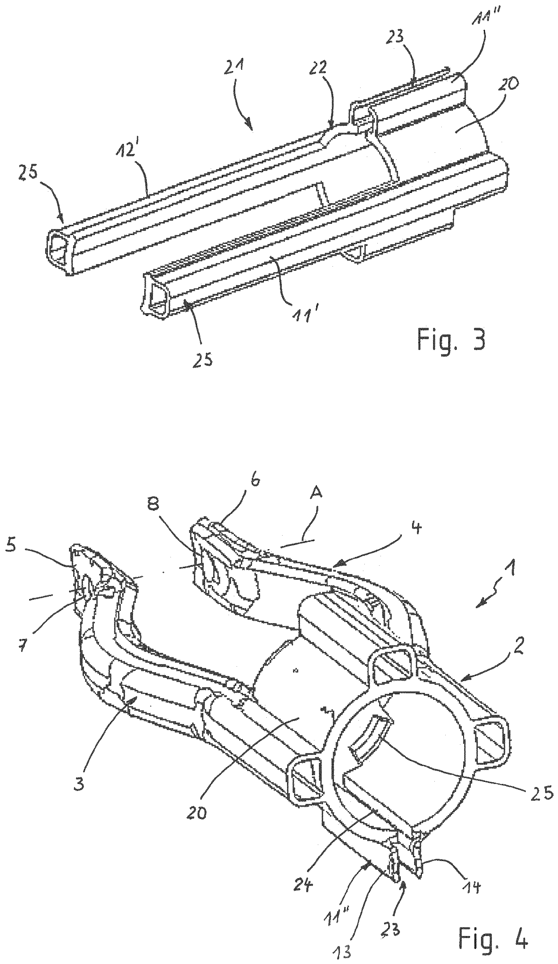

Figur 4 zeigt eine Federbeingabel 1. Die Federbeingabel 1 weist eine Federbeinaufnahme 2 und zwei sich von der Federbeinaufnahme 2 einseitig weg erstreckende Gabelarme 3, 4 auf. Die Gabelarme 3, 4 verlaufen bogenförmig gekrümmt und sind endseitig abgeflacht. Die abgeflachten Endabschnitte 5, 6 sind parallel zueinander ausgerichtet und mit Anbindungspunkten 7, 8 versehen. Bei den Anbindungspunkten 7, 8 handelt es sich um jeweils durch eine Lochung in den Endabschnitten 5, 6 hergestellte Lagersitze. Die Anbindungspunkte 7, 8 weisen eine sich quer zu der Längserstreckung der Federbeingabel 1 gerichtete, gemeinsame Achse A auf.

Die Federbeingabel 1 besteht aus Leichtmetall, insbesondere aus Aluminium bzw. aus einer Aluminiumlegierung und ist aus einem Strangpressprofil 9 hergestellt.

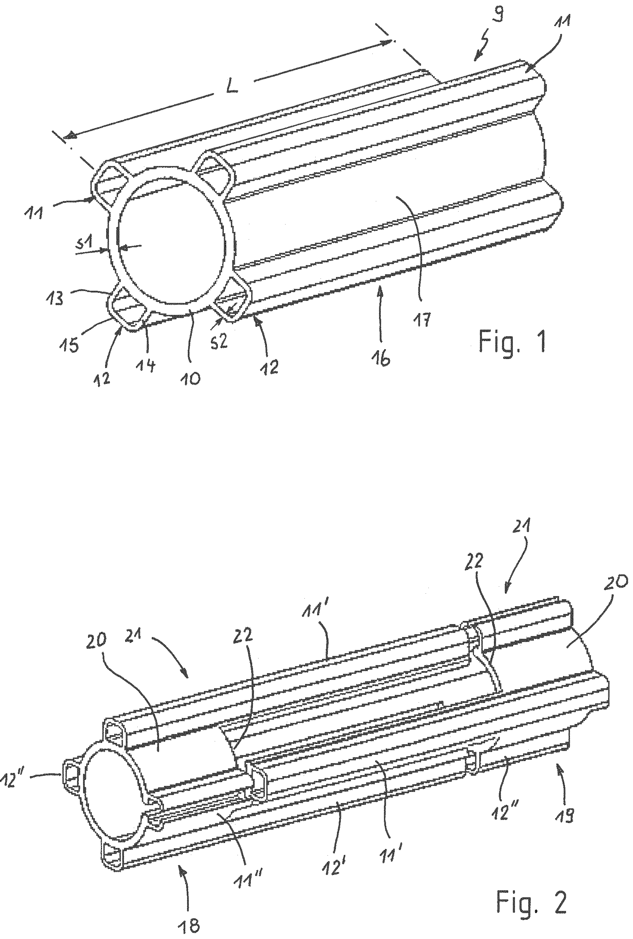

Ein Strangpressprofil 9, welches als Ausgangsprodukt für die Herstellung von jeweils zwei Federgabeln 1 verwendet wird, ist in der Figur 1 dargestellt.

Das Strangpressprofil 9 weist eine zentrale, mittige Hauptkammer 10 auf. Die Hauptkammer 10 ist zylindrisch konfiguriert. Außenseitig über den Umfang versetzt zueinander angeordnet sind vier Längskammern 11, 12 angeordnet. Die vier Längskammern 11, 12 weisen im Querschnitt eine etwa U-förmige Kontur auf mit jeweils zwei Längsstegen 13, 14 und einer die Längsstege 13, 14 verbindende Rückwand 15. Die Längskammern 11, 12 erstrecken sich über die gesamte Länge L der Hauptkammer 10.

Die Hauptkammer 10 des Strangpressprofils 9 weist eine Wandstärke s1 auf. Diese Wandstärke s1 der Hauptkammer 10 ist größer als die Wandstärke s2 einer Längskammer 11 bzw. 12. Die Wandstärke s1 der Hauptkammer 10 und die Wandstärke s2 der Längskammern 11, 12 sind folglich voneinander verschieden.

Zur Herstellung der Federbeingabeln 1 werden zwischen den Längskammern 11, 12 in einem mittleren Bereich 16 des Strangpressprofils 9 liegende Wandabschnitte 17 der Hauptkammer 10 entlang der Längskammern 11, 12 entfernt. An beiden Enden 18, 19 des Strangpressprofils 9 verbleiben Zylinderabschnitte 20. Danach wird das Strangpressprofil 9 in zwei Halbzeuge 21 getrennt. Hierzu werden jeweils zwei gegenüberliegende Längskammern 11, 12 direkt hinter bzw. parallel zur inneren Kante 22 eines Zylinderabschnittes 20 einmal am Ende 18 und zum anderen Ende 19 getrennt.

Auf diese Weise entstehen zwei identische Halbzeuge 21, von denen eines in der Figur 3 dargestellt ist. Das Halbzeug 21 weist den Zylinderabschnitt 20 und zwei sich aus den Längskammern 11, 12 gebildete, gegenüberliegende und gegenüber dem Zylinderabschnitt 20 vorstehende Armabschnitte 11', 12' auf. Von dem vorher jeweils um 90° versetzt verlaufenden Längskammern 11, 12 sind die gekürzten Längskammern 11", 12" am Zylinderabschnitt 20 stehen geblieben.

Bei der mechanischen Bearbeitung der Halbzeuge 21 sind die Zylinderabschnitte 20 jeweils mit einem Längsschlitz 23 versehen worden. Der Längsschlitz 23 erstreckt sich durch eine der gekürzten Längskammern 11" und trennt die Wand 24 des Zylinderabschnittes 20 und die Rückwand 15 der Längskammer 11.

Aus jedem Halbzeug 21 wird dann durch mechanische Bearbeitung eine Federbeingabel 1 erzeugt. Bei der mechanischen Bearbeitung werden die Gabelarme 3, 4 hergestellt. Hierzu werden die Armabschnitte 11', 12' nach außen gebogen und endseitig wieder nach innen gerichtet sowie deren freie Enden 25 abgeflacht und in den abgeflachten Endabschnitten 5, 6 mit den Anbindungspunkten 7, 8 versehen. Hierdurch entstehen die Lagersitze in den Endabschnitten 5, 6 der Gabelarme 3, 4, wie in Figur 4 dargestellt. Jeder Gabelarm 3, 4 erstreckt sich von der äußeren Stirnseite 26 der Federbeinaufnahme 2 entlang des Zylinderabschnitts 20 und ragt gegenüber dem Zylinderabschnitt 20 vor.

Am inneren gabelarmseitigen Ende des Zylinderabschnitts 20 weist dieser einen Vorsprung 25 auf. Der Vorsprung 25 ist aus dem Zylinderabschnitt 20 herausgearbeitet und nach einwärtsgerichtet umgeformt. Der Vorsprung 25 bildet einen mechanischen Endstop für die Dämpfermontage. Dieser soll ein Weiterrutschen des Dämpferrohrs bei der Montage vermeiden, bis das Dämpferrohr fest eingespannt und der Dämpfer durch eine an den Stegen 13, 14 der mit dem Längsschnitt 23 versehenen Längskammer 11" aufgebrachten Klemmkraft gehalten ist.

### Bezugszeichen:

- 1 -: Federbeingabel
- 2 -: Federbeinaufnahme
- 3 -: Gabelarm
- 4 -: Gabelarm
- 5 -: Endabschnitt
- 6 -: Endabschnitt
- 7 -: Anbindungspunkt
- 8 -: Anbindungspunkt
- 9 -: Strangpressprofil
- 10 -: Hauptkammer
- 11 -: Längskammer
- 11' -: Armabschnitt
- 11" -: Längskammer
- 12 -: Längskammer
- 12'-: Armabschnitt
- 12"-: Längskammer
- 13 -: Längssteg
- 14 -: Längssteg
- 15 -: Rückwand
- 16 -: mittlerer Bereich
- 17 -: Wandabschnitt
- 18 -: Ende
- 19 -: Ende
- 20 -: Zylinderabschnitt
- 21 -: Halbzeug
- 22 -: innere Kante
- 23 -: Längsschlitz
- 24 -: Wand
- 25 -: Vorsprung

- L -: Länge
- s1 -: Wandstärke von 10
- s2 -: Wandstärke von 11, 12

## Patentansprüche

1. Verfahren zur Herstellung von Federbeingabeln (1) für Kraftfahrzeuge, wobei eine Federbeingabel (1) eine Federbeinaufnahme (2) und Gabelarme (3, 4) aufweist und aus einem metallischen Strangpressprofil (9) hergestellt wird, welches eine zentrale, mittige Hauptkammer (10) mit außenseitigen Längskammern (11, 12) aufweist, **gekennzeichnet durch** folgende Schritte:
- Bereitstellen eines Strangpressprofils (9) mit mindestens vier Längskammern (11, 12), welche über den Umfang der Hauptkammer (10) versetzt zueinander angeordnet sind;
- Entfernen von zwischen den Längskammern (11, 12) liegenden Wandabschnitten (17) der Hauptkammer (10) und Trennen des Strangpressprofils (9) in zwei Halbzeuge (21), welche jeweils einen Zylinderabschnitt (20) und zwei sich gegenüberliegende und gegenüber dem Zylinderabschnitt (20) vorstehende Armabschnitte (11', 12') aufweist;
- Mechanische Bearbeitung der Halbzeuge (21) zu jeweils einer Federbeingabel (1).

2. Verfahren nach Anspruch 1, **dadurch gekennzeichnet, dass** dem Strangpressprofil (9) zwei identische Halbzeuge (21) hergestellt werden.

3. Verfahren nach Anspruch 1 oder 2, **dadurch gekennzeichnet, dass** die Längskammern (11, 12) auf einem Teilkreis um 90° +/- 15° versetzt zueinander angeordnet sind.

4. Verfahren nach einem der Ansprüche 1 bis 3, **dadurch gekennzeichnet, dass** bei der mechanischen Bearbeitung der Halbzeuge (21) die Zylinderabschnitte (20) mit einem Längsschlitz (23) versehen werden.

5. Verfahren nach Anspruch 4, **dadurch gekennzeichnet, dass** der Längsschlitz (23) entlang einer gekürzten Längskammer (11") vorgenommen wird.

6. Verfahren nach einem der Ansprüche 1 bis 5, **dadurch gekennzeichnet, dass** bei der mechanischen Bearbeitung der Halbzeuge (21) die Armabschnitte (11', 12') gebogen, endseitig abgeflacht und im abgeflachten Endabschnitt (5, 6) mit Anbindungspunkten (7, 8) versehen werden.

7. Verfahren nach Anspruch 6, **dadurch gekennzeichnet, dass** bei der mechanischen Bearbeitung der Halbzeuge (21) die Anbindungspunkte (9) zueinander parallel ausgerichtet werden.

8. Verfahren nach einem der Ansprüche 1 bis 7, **dadurch gekennzeichnet, dass** ein Strangpressprofil (9) aus Leichtmetall, insbesondere aus Aluminium oder einer Aluminiumlegierung, verwendet wird.

9. Verfahren nach einem der Ansprüche 1 bis 8, **dadurch gekennzeichnet, dass** ein Strangpressprofil (9) verwendet wird, wobei die Wandstärke (s1) der Hauptkammer (10) und die Wandstärke (s2) der Längskammern (11, 12) voneinander verschieden sind.

10. Verfahren nach Anspruch 9, **dadurch gekennzeichnet, dass** die Wandstärke (s1) der Hauptkammer (10) größer ist als die Wandstärke (s2) einer Längskammer (11, 12).

## Claims

1. Method for producing suspension strut forks (1) for motor vehicles, wherein a suspension strut fork (1) has a suspension strut receptacle (2) and fork arms (3, 4) and is produced from a metallic extruded profile (9) which has a central, middle main chamber (10) with longitudinal chambers (11, 12) on the outside, **characterised by** the following steps:
- providing an extruded profile (9) with at least four longitudinal chambers (11, 12) which are arranged offset with respect to one another over the circumference of the main chamber (10);
- removing wall portions (17) of the main chamber (10) which are situated between the longitudinal chambers (11, 12), and separating the extruded profile (9) into two semi-finished parts (21), which each have a cylinder portion (20) and two oppositely situated arm portions (11', 12') which project relative to the cylinder portion (20);
- mechanically machining the semi-finished parts (21) to form in each case one suspension strut fork (1).

2. Method according to claim 1, **characterised in that** two identical semi-finished parts (21) are produced from the extruded profile (9).

3. Method according to claim 1 or 2, **characterised in that** the longitudinal chambers (11, 12) are arranged offset with respect to one another by 90° +/- 15° on a pitch circle.

4. Method according to any of claims 1 to 3, **characterised in that** during the mechanical machining of the semi-finished parts (21), the cylinder portions (20) are provided with a longitudinal slot (23).

5. Method according to claim 4, **characterised in that** the longitudinal slot (23) is made along a shortened longitudinal chamber (11").

6. Method according to any of claims 1 to 5, **characterised in that** during the mechanical machining of the semi-finished parts (21), the arm portions (11', 12') are bent, flattened at the ends, and provided with attachment points (7, 8) in the flattened end portion (5, 6).

7. Method according to claim 6, **characterised in that** during the mechanical machining of the semi-finished parts (21), the attachment points (9) are aligned parallel to one another.

8. Method according to any of claims 1 to 7, **characterised in that** an extruded profile (9) made of light metal, in particular aluminium or an aluminium alloy, is used.

9. Method according to any of claims 1 to 8, **characterised in that** an extruded profile (9) is used, wherein the wall thickness (s1) of the main chamber (10) and the wall thickness (s2) of the longitudinal chambers (11, 12) differ from one another.

10. Method according to claim 9, **characterised in that** the wall thickness (s1) of the main chamber (10) is greater than the wall thickness (s2) of a longitudinal chamber (11, 12).

## Revendications

1. Procédé de fabrication de fourches de jambe de suspension (1) pour véhicules automobiles, dans lequel une fourche de jambe de suspension (1) présente un logement de jambe de suspension (2) et des bras de fourche (3, 4) et est fabriquée à partir d'un profilé extrudé métallique (9), lequel présente une chambre principale centrale (10) avec des chambres longitudinales (11, 12) côté extérieur, **caractérisé par** les étapes suivantes :
- fourniture d'un profilé extrudé (9) avec au moins quatre chambres longitudinales (11, 12), lesquelles sont disposées de manière décalée les unes aux autres sur la périphérie de la chambre principale (10) ;
- retrait des sections de paroi (17) de la chambre principale (10) situées entre les chambres longitudinales (11, 12) et séparation du profilé extrudé (9) en deux produits semi-finis (21), lesquels présentent respectivement une section cylindrique (20) et deux sections de bras (11', 12') situées à l'opposé l'une de l'autre et faisant saillie de la section cylindrique (20) ;
- usinage mécanique des produits semi-finis (21) respectivement en une fourche de jambe de suspension (1).

2. Procédé selon la revendication 1, **caractérisé en ce que** deux produits semi-finis identiques (21) sont fabriqués à partir du profilé extrudé (9).

3. Procédé selon la revendication 1 ou 2, **caractérisé en ce que** les chambres longitudinales (11, 12) sont disposées sur un cercle primitif décalé les unes aux autres de 90° +/-15°.

4. Procédé selon l'une quelconque des revendications 1 à 3, **caractérisé en ce que** lors du traitement mécanique des produits semi-finis (21), les sections de cylindre (20) sont pourvues d'une fente oblongue (23).

5. Procédé selon la revendication 4, **caractérisé en ce que** la fente oblongue (23) est réalisée le long d'une chambre longitudinale raccourcie (11").

6. Procédé selon l'une quelconque des revendications 1 à 5, **caractérisé en ce que** lors du traitement mécanique des produits semi-finis (21), les sections de bras (11', 12') sont pliées, aplaties aux extrémités et pourvues de points de connexion (7, 8) dans la section d'extrémité aplatie (5, 6).

7. Procédé selon la revendication 6, **caractérisé en ce que** pendant le traitement mécanique des produits semi-finis (21), les points de connexion (9) sont alignés parallèlement les uns aux autres.

8. Procédé selon l'une quelconque des revendications 1 à 7, **caractérisé en ce qu'**un profilé extrudé (9) en métal léger, en particulier en aluminium ou en alliage d'aluminium, est utilisé.

9. Procédé selon l'une quelconque des revendications 1 à 8, **caractérisé en ce qu'**un profilé extrudé (9), dans lequel l'épaisseur de paroi (s1) de la chambre principale (10) et l'épaisseur de paroi (s2) des chambres longitudinales (11, 12) sont différentes l'une de l'autre, est utilisé.

10. Procédé selon la revendication 9, **caractérisé en ce que** l'épaisseur de paroi (s1) de la chambre principale (10) est supérieure à l'épaisseur de paroi (s2) d'une chambre longitudinale (11, 12).
